(19) Europäisches Patentamt
European Patent Office
Office européen des brevets

(11) EP 3 728 465 B1

(12) EUROPEAN PATENT SPECIFICATION

(45) Date of publication and mention of the grant of the patent:
**04.08.2021 Bulletin 2021/31**

(21) Application number: **18816111.1**

(22) Date of filing: **18.12.2018**

(51) Int Cl.:
***C08L 55/02*** *(2006.01)* ***C08L 25/12*** *(2006.01)*
***C08L 25/16*** *(2006.01)* ***C08L 33/06*** *(2006.01)*

(86) International application number:
**PCT/EP2018/085440**

(87) International publication number:
**WO 2019/121647 (27.06.2019 Gazette 2019/26)**

(54) **ABS THERMOPLASTIC MOLDING COMPOSITION FOR BLOW MOLDING**

THERMOPLASTISCHE ABS-FORMZUSAMMENSETZUNG ZUM BLASFORMEN

COMPOSITION DE MOULAGE THERMOPLASTIQUE ABS POUR MOULAGE PAR SOUFFLAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.12.2017 EP 17208468**

(43) Date of publication of application:
**28.10.2020 Bulletin 2020/44**

(73) Proprietor: **INEOS Styrolution Group GmbH**
**60325 Frankfurt (DE)**

(72) Inventors:
- **NIESSNER, Norbert**
  **67159 Friedelsheim (DE)**
- **MICHELS, Gisbert**
  **51375 Leverkusen (DE)**
- **WITTENBERG, Nils**
  **65719 Hofheim am Taunus (DE)**
- **AHN, SangJun**
  **Seoul 05658 (KR)**
- **MADHAV, Shridhar**
  **Vadodara 390002 (IN)**
- **GEVARIA, Kirit**
  **Vadodara 390008 (IN)**
- **BHAVSAR, Pratik**
  **Bil, Gujarat 391410 (IN)**

(74) Representative: **Jacobi, Markus Alexander**
**Patentanwälte**
**Isenbruck Bösl Hörschler PartG mbB**
**Eastsite One**
**Seckenheimer Landstrasse 4**
**68163 Mannheim (DE)**

(56) References cited:
**WO-A1-2006/059819**
**WO-A1-2015/074297**
**CN-A- 106 046 589**
**JP-A- 2001 279 049**
**US-A1- 2017 355 847**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 728 465 B1

## Description

The invention is directed to ABS thermoplastic molding compositions that exhibit high melt strength, an improved parison stability, paintability, and heat resistance along with good impact modification.

In order to obtain heat resistant ABS polymer compositions for blow molding it is common practice to incorporate imide co-monomers into the SAN matrix. N-phenylmaleimide (NPMI) has been used to produce styrene-acrylonitrile-N-phenylmaleimide (SAN/NPMI)-terpolymers. Said terpolymers often have a high molar mass ($M_W \sim$ 400KDa or more). The melt flow index (MFI) of said prior art ABS polymer compositions often is in the range of 4 to 7 g/10 min (220°C, 10 kg load).

CN 103613877 A describes a heat-resistant ABS resin composition suitable for blow-molded products and in the processing of painted automobile parts which comprises a NPMI-alpha-methyl styrene-acrylonitrile-styrene quaterpolymer as heat resistance agent.

CN 101250314 A discloses a heat-resisting ABS composition for the blow molding, which comprises an ABS graft copolymer, a SAN copolymer and a terpolymer made of NPMI, maleic anhydride and styrene, or a quaterpolymer made of NPMI, maleic anhydride , $\alpha$-methylstyrene and acrylonitrile.

JP 2001-279049 discloses ABS-based resin compositions excellent in blow moldability and heat resistance comprising (a) a graft polymer obtained by graft polymerization of aromatic vinyl compounds, vinyl cyanide and optionally $\alpha,\beta$-unsaturated glycidyl ester compounds, in the presence of a polybutadiene latex and (b) a polymer made from aromatic vinyl compounds, vinyl cyanide and NPMI. The MFI (10 kg load) measured at 240°C is in the range of 3.0 to 8.5 g/10 min.

US 2010/0119750 describes a thermoplastic resin composition for blow molding comprising ABS graft copolymers (A1), (A2), a SAN-co- or S/AMS/AN-terpolymer (A3) and an antistatic agent (B). ABS graft copolymer (A1) is made from a monomer mixture additionally comprising an $\alpha,\beta$-unsaturated glycidyl ester compound.

WO 2006/059819 describes a thermoplastic resin composition with improved impact resistance, dimensional stability, heat resistance and blow molding properties.

The resin composition comprises 3 types of ABS graft copolymers having particles of a different particle size and 2 types of SAN copolymers, a long chain ($M_W$ 50,000 to 2,000,000) and a branched copolymer ($M_W$ 100,000 to 2,000,000). The MFI (220 °C, 10 kg load) is in the range of 2.3 to 3.9 g/10 min.

However, said prior art ABS molding compositions have several disadvantages like unmelt popups on the component surface with poor paintability and with a limitation to make thinner components. Moreover, NPMI is known to reduce the impact strength of ABS drastically thus causing problems for exterior automotive applications. Production of high molar mass SAN co- or terpolymers is another constraint for many SAN production plants.

It is one object of the invention to provide novel thermoplastic molding compositions having good blow moldability with better surface properties and better paintability, higher melt strength and sagging resistance during long parison extrusion, as well as a higher impact strength. Furthermore, the thermoplastic molding composition shall not comprise NPMI as co-monomer or SAN copolymers having high molar masses $M_W$ of 400,000 g/mol or more. Moreover, the novel thermoplastic molding composition shall facilitate the processability of large components - in particular for automotive applications - having a weight in the range of 5 to 6 kg.

One aspect of the invention is a thermoplastic molding composition comprising (or consisting of) components A, B, C, D and E:

(A) 30 to 40 wt.-% of at least one graft copolymer (A) consisting of 15 to 60 wt.-%, preferably 20 to 50 wt.-% of a graft sheath (A2) and 40 to 85 wt.-%, preferably 50 to 80 wt.-% of a graft substrate - an agglomerated butadiene rubber latex - (A1), where (A1) and (A2) sum up to 100 wt.-%, obtained by emulsion polymerization of
styrene and acrylonitrile in a weight ratio of 95:5 to 50:50 to obtain a graft sheath (A2), it being possible for styrene and/or acrylonitrile to be replaced partially (less than 50 wt.-%) by alpha-methylstyrene, methyl methacrylate or maleic anhydride or mixtures thereof,
in the presence of at least one agglomerated butadiene rubber latex (A1) with a median weight particle diameter $D_{50}$ of 200 to 800 nm,
preferably 225 to 650 nm, more preferably 250 to 600 nm, most preferred 280 to 350 nm; where the agglomerated rubber latex (A1) is obtained by agglomeration of at least one starting butadiene rubber latex (S-A1) having a median weight particle diameter $D_{50}$ of equal to or less than 120 nm, preferably equal to or less than 110 nm, with at least one acid anhydride, preferably acetic anhydride or mixtures of acetic anhydride with acetic acid, in particular acetic anhydride;

(B) 25 to 35 wt.-% of at least one copolymer (B) of alpha-methylstyrene and acrylonitrile in a weight ratio of from 95:5 to 50:50, preferably 75:25 to 55:45, it being possible for alpha-methylstyrene and/or acrylonitrile to be partially (less than 50 wt.-%) replaced by methyl methacrylate, maleic anhydride and/or 4-phenylstyrene;

(C) 30 to 40 wt.-% of at least one copolymer (C) of styrene and acrylonitrile in a weight ratio of from 95:5 to 50:50, preferably 75:25 to 65:35, more preferably 73:27 to 67:33, it being possible for styrene and/or acrylonitrile to be

partially (less than 50 wt.-%) replaced by methyl methacrylate, maleic anhydride and/or 4-phenylstyrene; wherein copolymer C has a weight average molar mass $M_w$ of 150,000 to 300,000 g/mol;

(D) 0.05 to 0.50 wt.-% of at least one homo- or copolymer (D) comprising (consisting of) structure units derived from at least one monomer with at least one $C_3$-$C_6$-alkyleneoxide side chain which epoxy group is the terminal group, or structure units derived from at least one monomer with at least one modified $C_3$-$C_6$-alkyleneoxide side chain having an ester, ether, carbonate, carbamate, hydroxyl, glycidyl or acrylate terminal group which group has been formed by reaction with the terminal epoxy group of the $C_3$-$C_6$-alkyleneoxide;

(E) 0 to 5 wt.-% of further additives and/or processing aids (E); where the components A, B, C, D and, if present E, sum to 100 wt.-%.

If component (E) is present, its minimum amount is 0.01 wt.-%, based on the entire thermoplastic molding composition molding compound. Wt.-% means percent by weight.

The median weight particle diameter $D_{50}$, also known as the $D_{50}$ value of the integral mass distribution, is defined as the value at which 50 wt.-% of the particles have a diameter smaller than the $D_{50}$ value and 50 wt.-% of the particles have a diameter larger than the $D_{50}$ value.

In the present application the weight-average particle diameter $D_w$, in particular the median weight particle diameter $D_{50}$, is determined with a disc centrifuge (e.g.: CPS Instruments Inc. DC 24000 with a disc rotational speed of 24 000 rpm).

The weight-average particle diameter $D_w$ is defined by the following formula (see G. Lagaly, O. Schulz and R. Ziemehl, Dispersionen und Emulsionen: Eine Einführung in die Kolloidik feinverteilter Stoffe einschließlich der Tonminerale, Darmstadt: Steinkopf-Verlag 1997, ISBN 3-7985 -1087-3, page 282, formula 8.3b):

$$D_w = \text{sum} ( n_i * d_i^4 ) / \text{sum}( n_i * d_i^3 )$$

$n_i$: number of particles of diameter $d_i$.

The summation is performed from the smallest to largest diameter of the particles size distribution. It should be mentioned that for a particles size distribution of particles with the same density which is the case for the starting rubber latices and agglomerated rubber latices the volume average particle size diameter Dv is equal to the weight average particle size diameter Dw.

The weight average molar mass $M_w$ is determined by GPC (solvent: tetrahydrofuran, polystyrene as polymer standard) with UV detection according to DIN 55672-1:2016-03.

It is preferable that the thermoplastic molding composition of the invention comprises (or consists of):

30 to 40 wt.-% wt.-% component (A),
25 to 35 wt.-% component (B),
30 to 40 wt.-% component (C),
0.05 to 0.40 wt.-% component (D),
0.01 to 5 wt.-% component (E).

It is particularly preferable that the thermoplastic molding composition comprises (or consists of):

32 to 37 wt.-% wt.-% component (A),
27 to 32 wt.-% component (B),
32 to 37 wt.-% component (C),
0.10 to 0.40 wt.-% component (D),
0.01 to 3 wt.-% component (E).

It is most preferable that the thermoplastic molding composition comprises (or consists of):

32 to 37 wt.-% component (A),
27 to 32 wt.-% component (B),
32 to 37 wt.-% component (C),
0.10 to 0.30 wt.-% component (D),
0.01 to 3 wt.-% component (E).

In addition to the components (A), (B), (C), (D) and (E), the inventive thermoplastic molding composition may contain further rubber-free thermoplastic resins (TP) not composed of vinyl monomers, such thermoplastic resins (TP)

being used in amounts of up to 1 parts by weight, preferably up to 0.8 parts by weight and particularly preferably up to 0.6 parts by weight (in each case based on 100 parts by weight of the total of (A), (B), (C), (D) and (E)).

The thermoplastic resins (TP) as the rubber-free copolymer in the thermoplastic molding composition according to the invention which can be used in addition to the mentioned components (A), (B), (C), (D) and (E), include for example polycondensation products, for example aromatic polycarbonates, aromatic polyester carbonates, polyesters, polyamides.

Suitable thermoplastic polycarbonates, polyester carbonates, polyesters and polyamides are known and described on pages 14 to 18 of WO 2012/022710.

Component (A)

Graft copolymer (A) (component (A)) is known and described in WO 2012/022710. Graft copolymer (A) consists of 15 to 60 wt.-% of a graft sheath (A2) and 40 to 85 wt.-% of a graft substrate - an agglomerated butadiene rubber latex - (A1), where (A1) and (A2) sum up to 100 wt.-%.

Preferably graft copolymer (A) is obtained by emulsion polymerization of styrene and acrylonitrile in a weight ratio of 80:20 to 65:35 to obtain a graft sheath (A2), it being possible for styrene and/or acrylonitrile to be replaced partially (less than 50 wt.-%, preferably less than 20 wt.-%, more preferably less than 10 wt.-%, based on the total amount of monomers used for the preparation of (A2)) by alpha-methylstyrene, methyl methacrylate or maleic anhydride or mixtures thereof, in the presence of at least one agglomerated butadiene rubber latex (A1) with a median weight particle diameter $D_{50}$ of 200 to 800 nm, preferably 225 to 650 nm, more preferably 250 to 600 nm, most preferred 280 to 350 nm, in particular 300 to 350 mm.

Preferably the at least one, preferably one, graft copolymer (A) consists of 20 to 50 wt.-% of a graft sheath (A2) and 50 to 80 wt.-% of a graft substrate (A1).

More preferably graft copolymer (A) consists of 30 to 45 wt.-% of a graft sheath (A2) and 55 to 70 wt.-% of a graft substrate (A1).

Preferably graft copolymer (A) consists of 35 to 45 wt.-% of a graft sheath (A2) and 55 to 65 wt.-% of a graft substrate (A1).

Preferably the obtained graft copolymer (A) has a core-shell-structure; the graft substrate (a1) forms the core and the graft sheath (A2) forms the shell.

Preferably for the preparation of the graft sheath (A2) styrene and acrylonitrile are not partially replaced by one of the above-mentioned comonomers; preferably styrene and acrylonitrile are polymerized alone in a weight ratio of 95:5 to 50:50, preferably 80:20 to 65:35.

The at least one, preferably one, starting butadiene rubber latex (S-A1) preferably has a median weight particle diameter $D_{50}$ of equal to or less than 110 nm, particularly equal to or less than 87 nm.

The term "butadiene rubber latex" means polybutadiene latices produced by emulsion polymerization of butadiene and less than 50 wt.-% (based on the total amount of monomers used for the production of polybutadiene polymers) of one or more monomers that are copolymerizable with butadiene as comonomers.

Examples for such monomers include isoprene, chloroprene, acrylonitrile, styrene, alpha-methylstyrene, $C_1$-$C_4$-alkylstyrenes, $C_1$-$C_8$-alkylacrylates, $C_1$-$C_8$-alkylmethacrylates, alkyleneglycol diacrylates, alkylenglycol dimethacrylates, divinylbenzol; preferably, butadiene is used alone or mixed with up to 30 wt.-%, preferably up to 20 wt.-%, more preferably up to 15 wt.-% styrene and/or acrylonitrile, preferably styrene.

Preferably the starting butadiene rubber latex (S-A1) consists of 70 to 99 wt.-% of butadiene and 1 to 30 wt.-% styrene.

More preferably the starting butadiene rubber latex (S-A1) consists of 85 to 99 wt.-% of butadiene and 1 to 15 wt.-% styrene.

Most preferably the starting butadiene rubber latex (S-A1) consists of 85 to 95 wt.-% of butadiene and 5 to 15 wt.-% styrene.

The agglomerated rubber latex (graft substrate) (A1) is obtained by agglomeration of the above-mentioned starting butadiene rubber latex (S-A1) with at least one acid anhydride, preferably acetic anhydride or mixtures of acetic anhydride with acetic acid, in particular acetic anhydride.

The preparation of graft copolymer (A) is described in detail in WO 2012/022710 A1. It can be prepared by a process comprising the steps: $\alpha$) synthesis of starting butadiene rubber latex (S-A1) by emulsion polymerization, $\beta$) agglomeration of latex (S-A1) to obtain the agglomerated butadiene rubber latex (A1) and $\gamma$) grafting of the agglomerated butadiene rubber latex (A1) to form a graft copolymer (A).

The synthesis (step $\alpha$)) of starting butadiene rubber latices (S-A1) is described in detail on pages 5 to 8 of WO 2012/022710 A1.

Preferably the starting butadiene rubber latices (S-A1) are produced by an emulsion polymerization process using metal salts, in particular persulfates (e.g. potassium persulfate), as an initiator and a rosin-acid based emulsifier.

As resin or rosin acid-based emulsifiers, those are being used in particular for the production of the starting

rubber latices by emulsion polymerization that contain alkaline salts of the rosin acids. Salts of the resin acids are also known as rosin soaps. Examples include alkaline soaps as sodium or potassium salts from disproportionated and/or dehydrated and/or hydrated and/or partially hydrated gum rosin with a content of dehydroabietic acid of at least 30 wt.-% and preferably a content of abietic acid of maximally 1 wt.-%. Furthermore, alkaline soaps as sodium or potassium salts of tall resins or tall oils can be used with a content of dehydroabietic acid of preferably at least 30 wt.-%, a content of abietic acid of preferably maximally 1 wt.-% and a fatty acid content of preferably less than 1 wt.-%.

Mixtures of the aforementioned emulsifiers can also be used for the production of the starting rubber latices. The use of alkaline soaps as sodium or potassium salts from disproportionated and/or dehydrated and/or hydrated and/or partially hydrated gum rosin with a content of dehydroabietic acid of at least 30 wt.-% and a content of abietic acid of maximally 1 wt.-% is advantageous.

Preferably the emulsifier is added in such a concentration that the final particle size of the starting butadiene rubber latex (S-A1) achieved is from 60 to 110 nm (median weight particle diameter $D_{50}$).

Polymerization temperature in the preparation of the starting rubber latices (S-A1) is generally 25°C to 160°C, preferably 40°C to 90°C. Further details to the addition of the monomers, the emulsifier and the initiator are described in WO 2012/022710. Molecular weight regulators, salts, acids and bases can be used as described in WO 2012/022710.

Then the obtained starting butadiene rubber latex (S-A1) is subjected to agglomeration (step $\beta$)) to obtain agglomerated rubber latex (A1). The agglomeration step is described in detail on pages 8 to 12 of WO 2012/022710 A1.

Preferably acetic anhydride, more preferably in admixture with water, is used for the agglomeration. Preferably the agglomeration step $\beta$) is carried out by the addition of 0.1 to 5 parts by weight of acetic anhydride per 100 parts of the starting rubber latex solids.

The agglomerated rubber latex (A1) is preferably stabilized by addition of further emulsifier while adjusting the pH value of the latex (A1) to a pH value (at 20°C) between pH 7.5 and pH 11, preferably of at least 8, particular preferably of at least 8.5, in order to minimize the formation of coagulum and to increase the formation of a stable agglomerated rubber latex (A1) with a uniform particle size. As further emulsifier preferably rosin-acid based emulsifiers as described above in step step $\alpha$) are used. The pH value is adjusted by use of bases such as sodium hydroxide solution or preferably potassium hydroxide solution.

The obtained agglomerated latex rubber latex (A1) has a median weight particle diameter $D_{50}$ of generally 200 to 800 nm, preferably 225 to 650 nm, more preferably 250 to 600 nm, most preferred 280 to 350 nm, in particular 300 to 350 nm. The obtained agglomerated latex rubber latex (A1) preferably is mono-modal.

In step $\gamma$) the agglomerated rubber latex (A1) is grafted to form the graft copolymer (A). Suitable grafting processes are described in detail on pages 12 to 14 of WO 2012/022710.

Graft copolymer (A) is obtained by emulsion polymerization of styrene and acrylonitrile - optionally partially replaced by alpha-methylstyrene, methyl methacrylate and/or maleic anhydride - in a weight ratio of 95:5 to 50:50 to obtain a graft sheath (A2) (in particular a graft shell) in the presence of the above-mentioned agglomerated butadiene rubber latex (A1).

Preferably graft copolymer (A) has a core-shell-structure.

The grafting process of the agglomerated rubber latex (A1) of each particle size is preferably carried out individually.

Preferably the graft polymerization is carried out by use of a redox catalyst system, e.g. with cumene hydroperoxide or tert.-butyl hydroperoxide as preferable hydroperoxides. For the other components of the redox catalyst system, any reducing agent and metal component known from literature can be used.

According to a preferred grafting process which is carried out in presence of at least one agglomerated butadiene rubber latex (A1) with a median weight particle diameter $D_{50}$ of preferably 280 to 350 nm, more preferably 300 to 330 nm, in an initial slug phase 15 to 40 wt.-%, more preferably 26 to 30 wt.-%, of the total monomers to be used for the graft sheath (A2) are added and polymerized, and this is followed by a controlled addition and polymerization of the remaining amount of monomers used for the graft sheath (A2) till they are consumed in the reaction to increase the graft ratio and improve the conversion. This leads to a low volatile monomer content of graft copolymer (A) with better impact transfer capacity.

Further details to polymerization conditions, emulsifiers, initiators, molecular weight regulators used in grafting step $\gamma$) are described in WO 2012/022710.

Component (B)

Preferably copolymer (B) (component (B)) is a copolymer of alpha-methylstyrene and acrylonitrile in a weight ratio of from 75:25 to 55:45, preferably 70:30 to 60:40, it being possible for alpha-methylstyrene and/or acrylonitrile to be partially (less than 50 wt.-%, preferably less than 20 wt.-%, more preferably less than 10 wt.-%, based on the total amount of monomers used for the preparation of (B)) replaced by methyl methacrylate, maleic anhydride and/or 4-phenylstyrene.

It is preferred that alpha-methylstyrene and acrylonitrile are not partially replaced by one of the above-mentioned comonomers. Component (B) is preferably a copolymer of alpha-methylstyrene and acrylonitrile.

Such copolymers preferably have weight average molecular weights Mw of from 20,000 to 220,000 g/mol and limiting viscosities [η] of from 20 to 110 mL/g (measured in accordance with DIN 53726 at 25°C in 0.5 wt.-% solution in dimethylformamide or dimethylsulfoxide. Details relating to the preparation of such copolymers are described, for example, in DE-A 2 420 358, DE-A 2 724 360 and in Kunststoff-Handbuch ([Plastics Handbook], Vieweg-Daumiller, volume V, (Polystyrol [Polystyrene]), Carl-Hanser-Verlag, Munich, 1969, pp. 122 ff., lines 12 ff.).

Such copolymers prepared by mass (bulk) or solution polymerization in, for example, toluene or ethylbenzene, have proved to be particularly suitable.

Component (C)

Preferably copolymer (C) (= component (C)) is a copolymer of styrene and acrylonitrile in a weight ratio of from 75:25 to 65:35, preferably 73:27 to 67:33, it being possible for styrene and/or acrylonitrile to be partially (less than 50 wt.-%, preferably less than 20 wt.-%, more preferably less than 10 wt.-%, based on the total amount of monomers used for the preparation of (B)) replaced by methyl methacrylate, maleic anhydride and/or 4-phenylstyrene.

It is preferred that styrene and acrylonitrile are not partially replaced by one of the above-mentioned comonomers. Component (C) is preferably a copolymer of styrene and acrylonitrile. The weight average molar mass $M_w$ of copolymer (C) generally is 150,000 to 300,000g/mol, preferably 170,000 to 230,000 g/mol, more preferably 180,000 to 220,000 g/mol.

Details relating to the preparation of such copolymers are described, for example, in DE-A 2 420 358, DE-A 2 724 360 and in Kunststoff-Handbuch ([Plastics Handbook], Vieweg-Daumiller, volume V, (Polystyrol [Polystyrene]), Carl-Hanser-Verlag, Munich, 1969, pp. 122 ff., lines 12 ff.). Such copolymers prepared by mass (bulk) or solution polymerization in, for example, toluene or ethylbenzene, have proved to be particularly suitable.

Component (D)

Preferably homo- or copolymer (D) (= component (D)) comprises (consists of) structure units derived from at least one, preferably one, monomer with at least one $C_3$-$C_6$-alkyleneoxide side chain wherein the epoxy group is the terminal group, or structure units derived from at least one, preferably one, monomer with at least one modified $C_3$-$C_6$-alkyleneoxide side chain having an ester, ether, carbonate, carbamate, hydroxyl, or acrylate terminal group which group has been formed by reaction with the terminal epoxy group of the $C_3$-$C_6$-alkyleneoxide.

Homo- or copolymers (D) comprising (consisting of) structure units derived from at least one monomer with $C_3$-$C_4$-alkyleneoxide side chains, in particular glycidyl side chains, having epoxy end groups are preferred.

Homo- or copolymers (D) often are (d1) poly($C_3$-$C_6$-alkyleneoxide acrylates) and/or poly($C_3$-$C_6$-alkyleneoxide methacrylates), or (d2) polyethers, polyolefins, polycarbonates or polysulfones, each with at least one functional group such as hydroxyl, amine, azide and ester groups bond to an $C_3$-$C_6$-alkyleneoxide side chain wherein the epoxy group is the terminal group.

The afore-mentioned polyethers (d2) are polyethers can be based on diols, triols or preferably higher alcohols (e.g. sorbitol). Suitable polyethers are for example such as polyalkylene glycols, in particular polyethylene glycols, and preferably sorbitol polyethers.

Homo- or copolymers (D) are preferably selected from the group consisting of: polyglycidylmethacrylates, polyglycidylacrylates, polyglycidylethers, in particular multi-epoxy functional polyglycidyl ethers (e.g. sorbitol polyglycidyl ether), polyglycidylazides, polyglycidylamines and poly ($C_2$-$C_6$)-alkylene-co-glycidyl (meth)acrylates, in particular polyethylene-co-glycidyl methacrylates.

In particular preferred homo- or copolymers (D) are polyglycidylmethacrylate and/or polyethylene-co-glycidyl methacrylate.

Suitable polyglycidylmethacrylates and/or polyethylene-co-glycidyl methacrylates are such of the following structures:

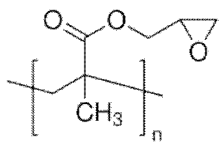

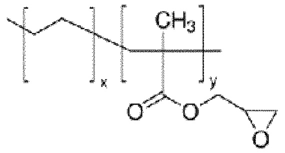

wherein n, x and y are integers, n = 50 to 100, x = 30 to 60 and y = 50 to 100 .

Polyglycidylmethacrylate is most preferred.

Component D can be prepared according to usual methods such as a transesterification of the backbone monomer with an epoxy alkanol having a terminal epoxy-group (e.g. glycidol) or with free radical polymerization as known from literature.

Suitable polyglycidylmethacrylates are commercially available, e.g. as Metablen® P-1901 from Mitsubishi Chemical Corporation.

In the thermoplastic molding composition according to the invention component D preferably is present in amounts of 0.05 to 0.40 wt.-%, more preferably 0.10 to 0.40 wt.-%, most preferably 0.10 to 0.30 wt.-%, in particular 0.15 to 0.25 wt.-%.

Component (E)

Various additives and/or processing aids (E) (= component (E)) may be added to the molding compounds according to the invention in amounts of from 0.01 to 5 wt.-% as assistants and processing additives. Suitable additives and/or processing aids (E) include all substances customarily employed for processing or finishing the polymers, except such comprising NPMI.

Examples include, for example, dyes, pigments, colorants, fibers/fillers, antistats, antioxidants, stabilizers for improving thermal stability, stabilizers for increasing photostability, stabilizers for enhancing hydrolysis resistance and chemical resistance, anti-thermal decomposition agents, dispersing agents, and in particular external/internal lubricants that are useful for production of molded bodies/articles.

These additives and/or processing aids may be admixed at any stage of the manufacturing operation, but preferably at an early stage in order to profit early on from the stabilizing effects (or other specific effects) of the added substance.

Preferably component (E) is at least one dispersing agent, lubricant and/or antioxidant.

Suitable lubricants/glidants and demolding agents include stearic acids, stearyl alcohol, stearic esters, amide waxes (bisstearylamide, in particular ethylenebisstearamide), polyolefin waxes and/or generally higher fatty acids, derivatives thereof and corresponding fatty acid mixtures comprising 12 to 30 carbon atoms.

Examples of suitable antioxidants include sterically hindered monocyclic or polycyclic phenolic antioxidants which may comprise various substitutions and may also be bridged by substituents. These include not only monomeric but also oligomeric compounds, which may be constructed of a plurality of phenolic units. Hydroquinones and hydroquinone analogs are also suitable, as are substituted compounds, and also antioxidants based on tocopherols and derivatives thereof.

It is also possible to use mixtures of different antioxidants. It is possible in principle to use any compounds which are customary in the trade or suitable for styrene copolymers, for example antioxidants from the Irganox range. In addition to the phenolic antioxidants cited above by way of example, it is also possible to use so-called costabilizers, in particular phosphorus- or sulfur-containing costabilizers. These phosphorus- or sulfur-containing costabilizers are known to those skilled in the art.

For further additives and/or processing aids, see, for example, "Plastics Additives Handbook", Ed. Gächter and Muller, 4th edition, Hanser Publ., Munich, 1996.

Specific examples of suitable additives and/or processing aids are mentioned on pages 23 to 26 of WO 2014/170406.

Preparation of Thermoplastic Molding Composition

The thermoplastic molding composition of the invention may be produced from the components (A), (B), (C), (D) and, if present (E), and optionally further polymers (TP) by any known method. However, it is preferable when the components are premixed and blended by melt mixing, for example conjoint extrusion, preferably with a twin-screw extruder, kneading or rolling of the components. This is done at temperatures in the range of from 160°C to 400°C, preferably from 180°C to 280°C, more preferably 220° C to 250°. In a preferred embodiment, the component (A) is first partially or completely isolated from the aqueous dispersion obtained in the respective production steps. For example, the graft copolymers (A) may be mixed as a moist or dry crumb/powder (for example having a residual moisture of from

1 to 40%, in particular 20 to 40%) with the matrix polymers (B) and (C), complete drying of the graft copolymers (A) then taking place during the mixing. The drying of the particles may also be performed as per DE-A 19907136.

The thermoplastic molding compositions according to the invention have a good blow moldability with improved surface properties, paintability, and sagging resistance during long parison extrusion. Their melt strength is low. The MFI of the inventive thermoplastic molding compositions is preferably in the range of 1.5 to 3.0 g/10 min, more preferably in the range of 1.5 to 2.8 g/10 min, in particular 1.5 to 2.6 g/10 min, measured according ISO standard 1133-1, 220°C, 10 kg load). Moreover, their impact strength is high.

The invention further provides for the use of the described thermoplastic molding composition for the production of molded articles in particular blow molded articles. Processing may be carried out using the known processes for thermoplast processing, in particular production may be effected by thermoforming, extruding, injection molding, calendaring, blow molding, compression molding, press sintering, deep drawing or sintering, preferably by blow molding.

Preferred is the use of the thermoplastic molding composition according to the invention for applications in the automotive and household sector. In particular preferred is the use for the production of blow molded articles having large dimensions such as a front bumper protector or spoiler.

The invention is further illustrated by the examples and the claims.

## Examples

### Test Methods

#### Particle Size Dw/ D50

For measuring the weight average particle size Dw (in particular the median weight particle diameter D50) with the disc centrifuge DC 24000 by CPS Instruments Inc. equipped with a low density disc, an aqueous sugar solution of 17.1 mL with a density gradient of 8 to 20% by wt. of saccharose in the centrifuge disc was used, in order to achieve a stable flotation behavior of the particles. A polybutadiene latex with a narrow distribution and a mean particle size of 405 nm was used for calibration. The measurements were carried out at a rotational speed of the disc of 24,000 r.p.m. by injecting 0.1 mL of a diluted rubber dispersion into an aqueous 24% by wt. saccharose solution. The calculation of the weight average particle size Dw was performed by means of the formula

$$D_w = \text{sum} ( n_i * d_i^4 ) / \text{sum}( n_i * d_i^3 )$$

$n_i$: number of particles of diameter $d_i$.

#### Molar Mass $M_w$

The weight average molar mass $M_w$ is determined by GPC (solvent: tetrahydrofuran, polystyrene as polymer standard) with UV detection according to DIN 55672-1:2016-03.

#### Tensile test

Tensile test on ABS blends was carried out at 23°C using a Universal testing Machine (UTM) of Lloyd Instruments, UK.

#### Flexural test

Flexural test was carried out on ABS blends (ASTMD 790 standard) using a UTM of Lloyd Instruments, UK.

#### Impact test

Izod impact tests were performed on notched specimens (ASTM D 256 standard) using an instrument of CEAST (part of Instron's product line), Italy.

#### Heat deflection temperature (HDT)

Heat deflection temperature test was performed on injection molded specimen (ASTMD 648 standard) using a CEAST, Italy instrument.

VICAT Softening Temperature (VST)

Vicat softening temperature test was performed on injection molded test specimen (ASTM D 1525 -09 standard) using a CEAST, Italy machine. Test is carried out at a heating rate of 120°C/hr (Method B) at 50 N loads.

Rockwell Hardness

Hardness of the injection molded test specimen (ISO - 2039/2-11) was tested using a Rockwell hardness tester.
Melt Flow Index (MFI) or Melt Volume Flow Rate (MFR)
MFI/MFR test was performed on pellets (ISO 1133 standard) using a MFI-machine of CEAST, Italy.

Materials used:

Component (A)

Fine-particle butadiene rubber latex (S-A1)

The fine-particle butadiene rubber latex (S-A1) which is used for the agglomeration step was produced by emulsion polymerization using tert-dodecylmercaptan as chain transfer agent and potassium persulfate as initiator at temperatures from 60° to 80°C. The addition of potassium persulfate marked the beginning of the polymerization. Finally the fine-particle butadiene rubber latex (S-A1) was cooled below 50°C and the non reacted monomers were removed partially under vacuum (200 to 500 mbar) at temperatures below 50°C which defines the end of the polymerization. Then the latex solids (in % per weight) were determined by evaporation of a sample at 180°C for 25 min. in a drying cabinet. The monomer conversion is calculated from the measured latex solids. The butadiene rubber latex (S-A1) is characterized by the following parameters, see table 1.

Latex S-A1-1

No seed latex is used. As emulsifier the potassium salt of a disproportionated rosin (amount of potassium dehydroabietate: 52 wt.-%, potassium abietate: 0 wt.-%) and as salt tetrasodium pyrophosphate is used.

Table 1: Composition of the butadiene rubber latex S-A1

| Latex | S-A1-1 |
|---|---|
| Monomer butadiene/styrene | 90/10 |
| Seed Latex (wt.-% based on monomers) | ./. |
| Emulsifier (wt.-% based on monomers) | 2.80 |
| Potassium Persulfate (wt.-% based on monomers) | 0.10 |
| Decomposed Potassium Persulfate (parts per 100 parts latex solids) | 0.068 |
| Salt (wt.-% based on monomers) | 0.559 |
| Salt amount relative to the weight of solids of the rubber latex | 0.598 |
| Monomer conversion (%) | 89.3 |
| Dw (nm) | 87 |
| pH | 10.6 |
| Latex solids content (wt.-%) | 42.6 |
| K | 0.91 |

$$K = W * ( 1 - 1.4 * S ) * Dw$$

W = decomposed potassium persulfate [parts per 100 parts rubber]
S = salt amount in percent relative to the weight of solids of the rubber latex

Dw = weight average particle size (= median particle diameter $D_{50}$) of the fine-particle butadiene rubber latex (S-A1)

Production of the coarse-particle, agglomerated butadiene rubber latices (A1)

The production of the coarse-particle, agglomerated butadiene rubber latices (A1) was performed with the specified amounts mentioned in table 2. The fine-particle butadiene rubber latex (S-A1) was provided first at 25°C and was adjusted if necessary with deionized water to a certain concentration and stirred. To this dispersion an amount of acetic anhydride based on 100 parts of the solids from the fine-particle butadiene rubber latex (S-A1) as fresh produced aqueous mixture with a concentration of 4.58 wt.-% was added and the total mixture was stirred for 60 seconds. After this the agglomeration was carried out for 30 minutes without stirring. Subsequently KOH was added as a 3 to 5 wt.-% aqueous solution to the agglomerated latex and mixed by stirring. After filtration through a 50 μm filter the amount of coagulate as solid mass based on 100 parts solids of the fine-particle butadiene rubber latex (B) was determined. The solid content of the agglomerated butadiene rubber latex (A), the pH value und the median weight particle diameter $D_{50}$ was determined.

Table 2: Production of the coarse-particle, agglomerated butadiene rubber latices (A1)

| latex A1 | | A1-1 | A1-2 |
|---|---|---|---|
| used latex S-A1 | | S-A1-1 | S-A1-1 |
| concentration latex S-A1 before agglomeration | wt.-% | 37.4 | 37.4 |
| amount acetic anhydride | parts | 0.90 | 0.91 |
| amount KOH | parts | 0.81 | 0.82 |
| concentration KOH solution | wt.-% | 3 | 3 |
| solid content latex A1 | wt.-% | 32.5 | 32.5 |
| coagulate | parts | 0.01 | 0.00 |
| pH | | 9.0 | 9.0 |
| $D_{50}$ | nm | 315 | 328 |

Production of the graft copolymers (A)

59.5 wt.-parts of mixtures of the coarse-particle, agglomerated butadiene rubber latices A1-1 and A1-2 (ratio 50 : 50, calculated as solids of the rubber latices (A1)) were diluted with water to a solid content of 27.5 wt.-% and heated to 55°C. 40.5 wt.-parts of a mixture consisting of 72 wt.-parts styrene, 28 wt.-parts acrylonitrile and 0.4 wt.-parts tert-dodecylmercaptan were added in 3 hours 30 minutes. At the same time when the monomer feed started the polymerization was started by feeding 0.15 wt.-parts cumene hydroperoxide together with 0.57 wt.-parts of a potassium salt of disproportionated rosin (amount of potassium dehydroabietate: 52 wt.-%, potassium abietate: 0 wt.-%) as aqueous solution and separately an aqueous solution of 0.22 wt.-parts of glucose, 0.36 wt.-% of tetrasodium pyrophosphate and 0.005 wt.-% of iron-(II)-sulfate within 3 hours 30 minutes. The temperature was increased from 55 to 75°C within 3 hours 30 minutes after start feeding the monomers. The polymerization was carried out for further 2 hours at 75°C and then the graft rubber latex (= graft copolymer A) was cooled to ambient temperature. The graft rubber latex was stabilized with ca. 0.6 wt.-parts of a phenolic antioxidant and precipitated with sulfuric acid, washed with water and the wet graft powder was dried at 70°C (residual humidity less than 0.5 wt.-%).

The obtained product is graft copolymer (A-I).

Component (B)

Statistical copolymer (B-I) from alphamethylstyrene and acrylonitrile with a ratio of polymerized styrene to acrylonitrile of 65:35 with a weight average molecular weight Mw of about 200,000 g/mol, a polydispersity of Mw/Mn of 2.5 and a melt volume flow rate (MVR) at 220°C/10kg of 6 to 7 mL/10 minutes, produced by free radical solution polymerization.

Component (C)

Statistical copolymer (C-I) from styrene and acrylonitrile with a ratio of polymerized styrene to acrylonitrile of

72:28 with a weight average molecular weight Mw of 185,000 g/mol, a polydispersity of Mw/Mn of 2.5 and a melt volume flow rate (MVR) at 220°C/10kg of 6 to 7 mL/10 minutes, produced by free radical solution polymerization.

Component (D)

D-I: Metablen® P-1901 (polyglycidyl methacrylate) obtained from Mitsubishi Chemical Corporation, Japan.

Component (E)

| | |
|---|---|
| EBS | Ethylene bis stearamide |
| SPEP | Distearyl pentaeritritol diphosphite |
| MS | Magnesium stearate |
| MgO | Magnesium oxide |
| PV Fast Yellow HGR/Pigment Yellow 191 | Red-shade yellow pigment from Clariant AG |
| CBP 1201 | Carbon black powder from Phillips Carbon Black Limited |

Thermoplastic compositions

Graft rubber polymer (A-I), AMSAN-copolymer (B-I), SAN-copolymer (C-I), component (D-I), and the aforementioned components (E) were mixed (ratio see Table 3a, batch size 5 kg) for 4 to 5 minutes in a high speed mixer to obtain a uniform premix and then said premix was melt blended in a twin-screw extruder at a speed of 80 rpm and using an incremental temperature profile from 220° C to 250° C for the different barrel zones. The extruded strands were cooled in a water bath, air-dried and pelletized. Standard test specimens (ISO test bars) of the obtained blend were injection moulded at a temperature of 230-260°C. The test results are presented in table 4.
This is followed by Injection moulding of this blend to mould the standard test specimens. The temperature profile of injection moulding machine barrel is 230-260°C incremental. Injection moulding is done and test specimens are prepared for mechanical testing. ISO test bars were injection moulded. The test results are shown in Table 3b.
The blow molding compositions of the comparative examples (= Cp. Ex.) 1 to 4 (see ingredients see Table 3a) were prepared and tested in the same manner as described for Example 1 (= Ex. 1) hereinbefore.

Table 3a Tested Blow molding Compositions

| Ingredients (wt.-%) | Cp. Ex.1 | Cp. Ex.2 | Cp. Ex.3 | Cp. Ex.4 | Ex. 1 |
|---|---|---|---|---|---|
| Component (A-I) | 29.5 | 29.5 | 34.4 | 31.5 | 34.4 |
| Component (B-I) | 29.5 | 54.1 | 64.0 | 64.0 | 29.5 |
| Component (C-I) | 39.4 | 14.8 | 0.0 | 0.0 | 34.4 |
| Metablen® P531A | 0.00 | 0.00 | 0.00 | 2.95 | 0.00 |
| Component (D-I) | 0.00 | 0.00 | 0.00 | 0.00 | 0.20 |
| Total | 98.4 | 98.4 | 98.4 | 98.4 | 98.6 |
| Additives | | | | | |
| EBS | 0.98 | 0.98 | 0.98 | 0.98 | 0.98 |
| SPEP | 0.15 | 0.15 | 0.15 | 0.15 | 0.15 |
| MS | 0.30 | 0.30 | 0.30 | 0.30 | 0.30 |
| MgO | 0.10 | 0.10 | 0.10 | 0.10 | 0.10 |
| Yellow HGR | 0.01 | 0.01 | 0.00 | 0.00 | 0.00 |
| CBP 1201 | 0.05 | 0.05 | 0.00 | 0.00 | 0.00 |
| Metablen® P531A: high molecular weight acrylic processing aid (blend of polymethylmethacrylate and butylacrylate) obtainable from Mitsubishi Chemical Corporation, Japan. | | | | | |

Table 3b Properties of the Tested Blow Molding Compositions

| Properties | Cp. Ex. 5 BM662 | Cp. Ex. 1 | Cp. Ex.2 | Cp. Ex. 3 | Cp. Ex. 4 | Ex. 1 |
|---|---|---|---|---|---|---|
| MFI, gm / 10 min, 220°C, 10 kg load | 2.5 | 5.0 | 4.5 | 4.0 | 2.8 | 2.5 |
| Notched Izod Impact Strength, 1/4", kg.cm/cm, at 23 °C, ASTM D 256 | 14 | 33.0 | 29.0 | 31.0 | 30.5 | 41 |
| Notched Izod Impact Strength, 1/8", kg.cm/cm, at 23 °C, ASTM D 256 | 19 | 36.0 | 33.0 | 36.0 | 35.0 | 51 |
| Tensile Yield Stress, kg/cm$^2$, 50 mm/min, ASTM D 638 | 490 | 525 | 520 | 460 | 505 | 485 |
| Elongation at Break, %, 50 mm/min, ASTM D 638 | 17 | 16 | 17 | 26 | 25 | 21 |
| Flexural Strength, kg/cm$^2$, 5 mm/min, ASTM D 790 | 825 | 900 | 910 | 740 | 843 | 800 |
| Flexural Modulus, kg/cm$^2$, 5 mm/min, ASTM D 790 | 25250 | 28600 | 2880 0 | 24100 | 25357 | 25650 |
| Rockwell Hardness, R - Scale, ISO 2039/2 | 105 | 108 | 108 | 103 | 105 | 104 |
| HDT, 1/4", °C, 1.8 MPa, ASTM D 648, Annealed 80°C, 4 hrs | 108 | 101 | 104 | 106 | 106 | 100 |
| VST, Rate B, 50 N, 120°C/hr, °C, ASTM D 1525 | 117 | 107 | 111 | 115 | 111 | 104 |
| BM 662: NPMI based ABS blow molding grade of LG Chemical Limited, Korea | | | | | | |

Table 3b shows that the molding composition according to the invention (Example 1) has exceptional increased impact strength and further improved melt strength (decrease of MFI more than 40%) compared to BM 662

The inventive composition according to Example 1 has been used for blow-molding of a large component (weight 5.5 kg) called front nudge guard-abs/front bumper protector. All required critical tests have been passed successfully as proven by the obtained HDT-, Impact strength- and MFI-values.

The composition described is high heat resistant and suitable for fast baking processes, like drying and curing of painted components at elevated temperature, in particular in automotive painting processes.

## Claims

**1.** Thermoplastic molding composition comprising components A, B, C, D and E

(A) 30 to 40 wt.-% of at least one graft copolymer (A) consisting of 15 to 60 wt.-%, preferably 20 to 50 wt.-% of a graft sheath (A2) and 40 to 85 wt.-%, preferably 50 to 80 wt.-% of a graft substrate - an agglomerated butadiene rubber latex - (A1), where (A1) and (A2) sum up to 100 wt.-%,
obtained by emulsion polymerization of
styrene and acrylonitrile in a weight ratio of 95:5 to 50:50 to obtain a graft sheath (A2), it being possible for styrene and/or acrylonitrile to be replaced partially (less than 50 wt.-%) by alpha-methylstyrene, methyl methacrylate or maleic anhydride or mixtures thereof,
in the presence of at least one agglomerated butadiene rubber latex (A1) with a median weight particle diameter $D_{50}$ of 200 to 800 nm;
where the agglomerated rubber latex (A1) is obtained by agglomeration of at least one starting butadiene rubber latex (S-A1) having a median weight particle diameter $D_{50}$ of equal to or less than 120 nm, with at least one acid anhydride, preferably acetic anhydride or mixtures of acetic anhydride with acetic acid, in particular acetic anhydride;
(B) 25 to 35 wt.-% of at least one copolymer (B) of alpha-methylstyrene and acrylonitrile in a weight ratio of

from 95:5 to 50:50, it being possible for alpha-methylstyrene and/or acrylonitrile to be partially (less than 50 wt.-%) replaced by methyl methacrylate, maleic anhydride and/or 4-phenylstyrene;
(C) 30 to 40 wt.-% of at least one copolymer (C) of styrene and acrylonitrile in a weight ratio of from 95:5 to 50:50, it being possible for styrene and/or acrylonitrile to be partially (less than 50 wt.-%) replaced by methyl methacrylate, maleic anhydride and/or 4-phenylstyrene;
wherein copolymer C has a weight average molar mass $M_w$ of 150,000 to 300,000 g/mol;
(D) 0.05 to 0.50 wt.-% of at least one homo- or copolymer (D) comprising structure units derived from at least one monomer with at least one $C_3$-$C_6$-alkyleneoxide side chain which epoxy group is the terminal group, or structure units derived from at least one monomer with at least one modified $C_3$-$C_6$-alkyleneoxide side chain having an ester, ether, carbonate, carbamate, hydroxyl, or acrylate terminal group which group has been formed by reaction with the terminal epoxy group of the $C_3$-$C_6$-alkyleneoxide;
(E) 0 to 5 wt.-% of further additives and/or processing aids (E);
where the components A, B, C, D and, if present E, sum to 100 wt.-%.

**2.** Thermoplastic molding composition according to claim 1 comprising 30 to 40 wt.-% wt.-% component (A),

25 to 35 wt.-% component (B),
30 to 40 wt.-% component (C),
0.05 to 0.40 wt.-% component (D),
0.01 to 5 wt.-% component (E).

**3.** Thermoplastic molding composition according to claim 1 or 2, wherein component (D) is a homo- or copolymer comprising structure units derived from at least one monomer with C3-C4-alkyleneoxide side chains, in particular glycidyl side chains, having epoxy end groups.

**4.** Thermoplastic molding composition according to any of claims 1 to 3, wherein component (D) is preferably selected from the group consisting of: polyglycidylmethacrylates, polyglycidylacrylates, polyglycidylethers, in particular multi-epoxy functional polyglycidyl ethers, polyglycidylazides, polyglycidylamines and poly (C2-C6)-alkylene-co-glycidyl (meth)acrylates, in particular polyethylene-co-glycidyl methacrylates.

**5.** Thermoplastic molding composition according to any of claims 1 to 4, wherein component (D) is polyglycidylmethacrylate and/or polyethylene-co-glycidyl methacrylate.

**6.** Thermoplastic molding composition according to any of claims 1 to 5, wherein the graft sheath (A2) is obtained by emulsion polymerization of styrene and acrylonitrile solely;
copolymer (B) is a copolymer of alpha-methylstyrene and acrylonitrile solely; and copolymer (C) is a copolymer of styrene and acrylonitrile solely.

**7.** Thermoplastic molding composition according to any of claims 1 to 6, wherein the agglomerated butadiene rubber latex (A1) has a median weight particle diameter $D_{50}$ of 280 to 350 nm, in particular 300 to 350 nm.

**8.** Thermoplastic molding composition according to any of claims 1 to 7, wherein copolymer (B) is a copolymer of alpha-methylstyrene and acrylonitrile in a weight ratio of from 75/25 to 55/45.

**9.** Thermoplastic molding composition according to any of claims 1 to 8, wherein copolymer (C) is a copolymer of styrene and acrylonitrile in a weight ratio of from 75/25 to 65/35.

**10.** Thermoplastic molding composition according to any of claims 1 to 9, wherein copolymer C has a weight average molar mass $M_w$ of 170,000 to 230,000 g/mol.

**11.** Process for the preparation of the thermoplastic molding composition according to any of claims 1 to 10 by melt mixing the components (A), (B), (C), (D) and, if present (E), and optionally further polymers (TP) at temperatures in the range of from 160°C to 400°C.

**12.** Use of thermoplastic molding compositions according to any of claims 1 to 10 for the production of molded, in particular blow molded, articles.

**13.** Molded articles, in particular blow molded articles, made from the thermoplastic molding composition according to

any of claims 1 to 10.

**14.** Use of molded articles, in particular blow molded articles, according to claim 13 for applications in the automotive and household sector.

**15.** Use of molded articles, in particular blow molded articles, according to claim 13 as a front bumper protector or spoiler.

**Patentansprüche**

**1.** Thermoplastische Formmasse, umfassend die Komponenten A, B, C, D und E:

(A) 30 bis 40 Gew.-% mindestens eines Pfropfcopolymers (A), bestehend aus 15 bis 60 Gew.-%, vorzugsweise 20 bis 50 Gew.-%, einer Pfropfhülle (A2) und
40 bis 85 Gew.-%, vorzugsweise 50 bis 80 Gew.-%, einer Pfropfgrundlage - eines agglomerierten Butadienkautschuklatex - (A1), wobei die Summe von (A1) und (A2) 100 Gew.-% ergibt,
erhalten durch Emulsionspolymerisation von Styrol und Acrylnitril in einem Gewichtsverhältnis von 95:5 bis 50:50 zum Erhalt einer Pfropfhülle (A2), wobei Styrol und/oder Acrylnitril teilweise (zu weniger als 50 Gew.-%) durch alpha-Methylstyrol, Methylmethacrylat oder Maleinsäureanhydrid oder Mischungen davon ersetzt werden können/kann, in Gegenwart von mindestens einem agglomerierten Butadienkautschuklatex (A1) mit einem gewichtsmittleren Teilchendurchmesser $D_{50}$ von 200 bis 800 nm;
wobei der agglomerierte Kautschuklatex (A1) durch Agglomeration mindestens eines Ausgangs-Butadienkautschuklatex (S-A1) mit einem gewichtsmittleren Teilchendurchmesser $D_{50}$ von gleich oder kleiner als 120 nm mit mindestens einem Säureanhydrid, vorzugsweise Essigsäureanhydrid oder Mischungen von Essigsäureanhydrid mit Essigsäure, insbesondere Essigsäureanhydrid, erhalten wird;
(B) 25 bis 35 Gew.-% mindestens eines Copolymers (B) von alpha-Methylstyrol und Acrylnitril in einem Gewichtsverhältnis von 95:5 bis 50:50, wobei alpha-Methylstyrol und/oder Acrylnitril teilweise (zu weniger als 50 Gew.-%) durch Methylmethacrylat, Maleinsäureanhydrid und/oder 4-Phenylstyrol ersetzt werden können/kann;
(C) 30 bis 40 Gew.-% mindestens eines Copolymers (C) von Styrol und Acrylnitril in einem Gewichtsverhältnis von 95:5 bis 50:5, wobei Styrol und/oder Acrylnitril teilweise (zu weniger als 50 Gew.-%) durch Methylmethacrylat, Maleinsäureanhydrid und/oder 4-Phenylstyrol ersetzt werden können/kann; wobei Copolymer C eine gewichtsmittlere Molmasse $M_w$ von 150.000 bis 300.000 g/mol aufweist;
(D) 0,05 bis 0,50 Gew.-% mindestens eines Homo- oder Copolymers (D), das Struktureinheiten, die sich von mindestens einem Monomer mit mindestens einer $C_3$-$C_6$-Alkylenoxid-Seitenkette ableiten, wobei es sich bei der Epoxidgruppe um die endständige Gruppe handelt, oder Struktureinheiten, die sich von mindestens einem Monomer mit mindestens einer modifizierten $C_3$-$C_6$-Alkylenoxid-Seitenkette mit einer durch Reaktion mit der endständigen Epoxidgruppe des $C_3$-$C_6$-Alkylenoxids gebildeten endständigen Ester-, Ether-, Carbonat-, Carbamat-, Hydroxyl- oder Acrylatgruppe ableiten, umfasst;
(E) 0 bis 5 Gew.-% weitere Additive und/oder Verarbeitungshilfsmittel (E);
wobei die Summe der Komponenten A, B, C, D und, sofern vorhanden, E 100 Gew.-% ergibt.

**2.** Thermoplastische Formmasse nach Anspruch 1, umfassend:

30 bis 40 Gew.-% Komponente (A),
25 bis 35 Gew.-% Komponente (B),
30 bis 40 Gew.-% Komponente (C),
0,05 bis 0,40 Gew.-% Komponente (D),
0,01 bis 5 Gew.-% Komponente (E).

**3.** Thermoplastische Formmasse nach Anspruch 1 oder 2, wobei es sich bei Komponente (D) um ein Homo- oder Copolymer handelt, das Struktureinheiten, die sich von mindestens einem Monomer mit $C_3$-$C_4$-Alkylenoxid-Seitenketten, insbesondere Glycidyl-Seitenketten, mit Epoxid-Endgruppen ableiten, umfasst.

**4.** Thermoplastische Formmasse nach einem der Ansprüche 1 bis 3, wobei Komponente (D) vorzugsweise aus der Gruppe bestehend aus Polyglycidylmethacrylaten, Polyglycidylacrylaten, Polyglycidylethern, insbesondere multiepoxidfunktionellen Polyglycidylethern, Polyglycidylaziden, Polyglycidylaminen und Poly($C_2$-$C_6$)-alkylen-co-glycidyl(meth)acrylaten, insbesondere Polyethylenco-glycidylmethacrylaten, ausgewählt ist.

5. Thermoplastische Formmasse nach einem der Ansprüche 1 bis 4, wobei es sich bei Komponente (D) um Polyglycidylmethacrylat und/oder Polyethylen-co-glycidylmethacrylat handelt.

6. Thermoplastische Formmasse nach einem der Ansprüche 1 bis 5, wobei
die Pfropfhülle (A2) durch Emulsionspolymerisation von
Styrol und Acrylnitril alleine
erhalten wird;
es sich bei Copolymer (B) um ein Copolymer von alpha-Methylstyrol und Acrylnitril alleine handelt und
es sich bei Copolymer (C) um ein Copolymer von Styrol und Acrylnitril alleine handelt.

7. Thermoplastische Formmasse nach einem der Ansprüche 1 bis 6, wobei der agglomerierte Butadienkautschuklatex (A1) einen gewichtsmittleren Teilchendurchmesser $D_{50}$ von 280 bis 350 nm, insbesondere 300 bis 350 nm, aufweist.

8. Thermoplastische Formmasse nach einem der Ansprüche 1 bis 7, wobei es sich bei Copolymer (B) um ein Copolymer von alpha-Methylstyrol und Acrylnitril in einem Gewichtsverhältnis von 75/25 bis 55/45 handelt.

9. Thermoplastische Formmasse nach einem der Ansprüche 1 bis 8, wobei es sich bei Copolymer (C) um ein Copolymer von Styrol und Acrylnitril in einem Gewichtsverhältnis von 75/25 bis 65/35 handelt.

10. Thermoplastische Formmasse nach einem der Ansprüche 1 bis 9, wobei Copolymer C eine gewichtsmittlere Molmasse $M_w$ von 170.000 bis 230.000 g/mol aufweist.

11. Verfahren zur Herstellung der thermoplastischen Formmasse nach einem der Ansprüche 1 bis 10 durch Schmelzemischen der Komponenten (A), (B), (C), (D) und, sofern vorhanden, (E), und gegebenenfalls weiteren Polymeren (TP) bei Temperaturen im Bereich von 160 °C bis 400 °C.

12. Verwendung von thermoplastischen Formmassen nach einem der Ansprüche 1 bis 10 zur Herstellung von Formkörpern, insbesondere Blasformkörpern.

13. Formkörper, insbesondere Blasformkörper, aus der thermoplastischen Formmasse nach einem der Ansprüche 1 bis 10.

14. Verwendung von Formkörpern, insbesondere Blasformkörpern, nach Anspruch 13 für Anwendungen im Automobil- und Haushaltssektor.

15. Verwendung von Formkörpern, insbesondere Blasformkörpern, nach Anspruch 13 als Frontstoßstangenschutz oder Spoiler.

## Revendications

1. Composition de moulage thermoplastique comprenant des composants A, B, C, D et E

(A) 30 à 40 % en poids d'au moins un copolymère greffé (A) constitué de
15 à 60 % en poids, préférablement 20 à 50 % en poids d'une gaine de greffe (A2) et 40 à 85 % en poids, préférablement 50 à 80 % en poids d'un substrat de greffe - un latex de caoutchouc de butadiène aggloméré - (A1), dans laquelle (A1) et (A2) totalisent 100 % en poids,
obtenu par polymérisation en émulsion de styrène et d'acrylonitrile en un rapport en poids de 95 : 5 à 50 : 50 pour obtenir une gaine de greffe (A2), le styrène et/ou l'acrylonitrile pouvant être remplacés partiellement (moins de 50 % en poids) par de l'alpha-méthylstyrène, du méthacrylate de méthyle ou de l'anhydride maléique ou des mélanges correspondants,
en la présence d'au moins un latex de caoutchouc de butadiène aggloméré (A1) doté d'un diamètre médian de particule en poids $D_{50}$ de 200 à 800 nm ;
dans laquelle le latex de caoutchouc aggloméré (A1) est obtenu par agglomération d'au moins un latex de caoutchouc de butadiène de départ (S-A1) possédant un diamètre médian de particule en poids $D_{50}$ égal ou inférieur à 120 nm, avec au moins un anhydride d'acide, préférablement de l'anhydride acétique ou des mélanges d'anhydride acétique avec de l'acide acétique, en particulier de l'anhydride acétique ;
(B) 25 à 35 % en poids d'au moins un copolymère (B) d'alpha-méthylstyrène et d'acrylonitrile en un rapport en

poids allant de 95 : 5 à 50 : 50, l'alpha-méthylstyrène et/ou l'acrylonitrile pouvant être remplacés partiellement (moins de 50 % en poids) par du méthacrylate de méthyle, de l'anhydride maléique et/ou du 4-phénylstyrène ;
(C) 30 à 40 % en poids d'au moins un copolymère (C) de styrène et d'acrylonitrile en un rapport en poids allant de 95 : 5 à 50 : 50, le styrène et/ou l'acrylonitrile pouvant être remplacés partiellement (moins de 50 % en poids) par du méthacrylate de méthyle, de l'anhydride maléique et/ou du 4-phénylstyrène ;
le copolymère C possédant une masse molaire moyenne en poids $M_w$ de 150 000 à 300 000 g/mole ;
(D) 0,05 à 0,50 % en poids d'au moins un homopolymère ou copolymère (D) comprenant des motifs structuraux issus d'au moins un monomère doté d'au moins une chaîne latérale de type oxyde d'alkylène en $C_{3-6}$ dont un groupe époxy est le groupe terminal, ou des motifs structuraux issus d'au moins un monomère doté d'au moins une chaîne latérale de type oxyde d'alkylène en $C_{3-6}$ modifiée possédant un groupe terminal de type ester, éther, carbonate, carbamate, hydroxyle, ou acrylate, lequel groupe ayant été formé par réaction avec le groupe époxy terminal de l'oxyde d'alkylène en $C_{3-6}$ ;
(E) 0 à 5 % en poids d'additifs supplémentaires et/ou d'auxiliaires de traitement (E) ;

dans laquelle les composants A, B, C, D et, s'il est présent, E, totalisent 100 % en poids.

**2.** Composition de moulage thermoplastique selon la revendication 1 comprenant

30 à 40 % en poids de composant (A),
25 à 35 % en poids de composant (B),
30 à 40 % en poids de composant (C),
0,05 à 0,40 % en poids de composant (D),
0,01 à 5 % en poids de composant (E).

**3.** Composition de moulage thermoplastique selon la revendication 1 ou 2, le composant (D) étant un homopolymère ou copolymère comprenant des motifs structuraux issus d'au moins un monomère doté de chaînes latérales de type oxyde d'alkylène en C3 à C4, en particulier de chaînes latérales de type glycidyle, possédant des groupes terminaux de type époxy.

**4.** Composition de moulage thermoplastique selon l'une quelconque des revendications 1 à 3, le composant (D) étant préférablement choisi dans le groupe constitué par : des poly(méthacrylates de glycidyle), des poly(acrylates de glycidyle), des poly(éthers de glycidyle), en particulier des poly(éthers de glycidyle) plusieurs fois fonctionnalisés par époxy, des poly(azotures de glycidyle), des polyglycidylamines et des poly(alkylène en C2 à C6-co-(méth)acrylates de glycidyle), en particulier des poly(éthylène-co-(méth)acrylates de glycidyle).

**5.** Composition de moulage thermoplastique selon l'une quelconque des revendications 1 à 4, le composant (D) étant un poly(méthacrylate de glycidyle) et/ou un poly(éthylène-co-(méth)acrylate de glycidyle).

**6.** Composition de moulage thermoplastique selon l'une quelconque des revendications 1 à 5, la gaine de greffe (A2) étant obtenue par polymérisation en émulsion de styrène et d'acrylonitrile uniquement ;
le copolymère (B) étant un copolymère d'alpha-méthylstyrène et d'acrylonitrile uniquement ; et le copolymère (C) étant un copolymère de styrène et d'acrylonitrile uniquement.

**7.** Composition de moulage thermoplastique selon l'une quelconque des revendications 1 à 6, le latex de caoutchouc de butadiène aggloméré (A1) possédant un diamètre médian de particule en poids $D_{50}$ de 280 à 350 nm, en particulier de 300 à 350 nm.

**8.** Composition de moulage thermoplastique selon l'une quelconque des revendications 1 à 7, le copolymère (B) étant un copolymère d'alpha-méthylstyrène et d'acrylonitrile en un rapport en poids allant de 75/25 à 55/45.

**9.** Composition de moulage thermoplastique selon l'une quelconque des revendications 1 à 8, le copolymère (C) étant un copolymère de styrène et d'acrylonitrile en un rapport en poids allant de 75/25 à 65/35.

**10.** Composition de moulage thermoplastique selon l'une quelconque des revendications 1 à 9, le copolymère C possédant une masse molaire moyenne en poids $M_w$ de 170 000 à 230 000 g/mole.

**11.** Procédé pour la préparation de la composition de moulage thermoplastique selon l'une quelconque des revendications 1 à 10 par mélange à l'état fondu des composants (A), (B), (C), (D) et, s'il est présent, (E), et éventuellement

d'autres polymères (TP) à des températures dans la plage allant de 160 °C à 400 °C.

**12.** Utilisation de compositions de moulage thermoplastiques selon l'une quelconque des revendications 1 à 10 pour la production d'articles moulés, en particulier moulés par soufflage.

**13.** Articles moulés, en particulier articles moulés par soufflage, préparés à partir de la composition de moulage thermoplastique selon l'une quelconque des revendications 1 à 10.

**14.** Utilisation d'articles moulés, en particulier d'articles moulés par soufflage, selon la revendication 13 pour des applications dans le secteur automobile et ménager.

**15.** Utilisation d'articles moulés, en particulier d'articles moulés par soufflage, selon la revendication 13 en tant que protecteur de pare-chocs avant ou becquet.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 103613877 A
- CN 101250314 A
- JP 2001279049 A
- US 20100119750 A
- WO 2006059819 A
- WO 2012022710 A
- WO 2012022710 A1
- DE 2420358 A
- DE 2724360 A
- WO 2014170406 A
- DE 19907136 A


### Non-patent literature cited in the description


- **G. LAGALY ; O. SCHULZ ; R. ZIEMEHL.** Dispersionen und Emulsionen: Eine Einführung in die Kolloidik feinverteilter Stoffe einschließlich der Tonminerale. Steinkopf-Verlag, 1997, 282
- Polystyrol [Polystyrene. **VIEWEG-DAUMILLER.** Kunststoff-Handbuch ([Plastics Handbook. Carl-Hanser-Verlag, 1969, 122 ff
- Plastics Additives Handbook. Hanser Publ, 1996